Europäisches Patentamt

European Patent Office

Office européen des brevets

(11) Publication number: **0 226 235**
**A1**

## (12) EUROPEAN PATENT APPLICATION

(21) Application number: **86201925.4**

(22) Date of filing: **05.11.86**

(51) Int. Cl.4: **H04N 5/32** , G03B 41/02

(30) Priority: **15.11.85 EP 85201880**

(43) Date of publication of application:
**24.06.87 Bulletin 87/26**

(84) Designated Contracting States:
**BE DE FR GB**

(71) Applicant: **AGFA-GEVAERT naamloze vennootschap**
**Septestraat 27**
**B-2510 Mortsel(BE)**

(72) Inventor: **Van Beeck, Walter Pieter**
**Zwaanaardestraat 77**
**B-9190 Sinaai(BE)**

(54) **Method and apparatus for producing an X-ray photograph of a specimen.**

(57) A method and an apparatus are described for the recording on a light-sensitive film (5) of an X-rayed specimen through the intermediary of an X-ray converter (2).

*FIG. 1*

## METHOD AND APPARATUS FOR PRODUCING AN X-RAY PHOTOGRAPH OF A SPECIMEN.

The present invention relates to a method and an apparatus for producing a hard-copy of an image that was obtained by X-raying an object. The invention more particulary relates to a method and an apparatus for registration on a light-sensitive film material of an image formed by x-rays and detected by a displacable x-ray converter.

The invention is very useful in the field of non-destructive material testing especially for those applications wherein the disposal of evidence on the examined object is required. The method and the apparatus of the present invention are most advantageous for the production of a hard-copy of objects to be examined that have a long and narrow, striplike form. Such applications include the inspection of welds on pipe-lines or applications in the field of aerospace or in ship-and bridge construction etc. However, the invention is not limited to the mentioned applications.

It is known in the field of non-destructive material testing to trace defects in materials by covering the part of the material to be inspected with a strip of packaged film of a kind that was especially fabricated and packaged for the purpose of in site x-ray examination of materials. The part of the material that is to be inspected is irradiated by x-rays and the film is exposed to direct irradiation by the transmitted x-rays while in the package.

It is known to produce images through the intermediary of an X-ray converter. In this known technique the X-rays transmitted through the specimen are converted into an electrical signal which can be used for forming a visual image on a video monitor. This technique provides rapid access to the X-ray image for inspection but it does not provide a hard copy. If a hard copy is required this can be formed by feeding the electrical representation to a CRT-camera, by exposing a sheet of light-sensitive material to the image on the CRT-camera and by processing said sheet.

In order to bring the whole of the image to be hard-copied within the image-size capability of the converter, the distance in between the specimen to be examined and the converter might be such that the image resolution becomes rather small. It is also possible to expose the x-ray converter repeatedly to different subparts of the specimen to be examined. In order to achieve an image of the entire specimen, a plurality of separate photographs are to be produced, processed and assembled.

It is an object of the present invention to provide a method and an apparatus which makes it much easier to produce hard copies of X-ray images of f.i. long narrow specimen, e.g. the joints of longitudinally welded pipes, or welded joints between pipes of large diameter.

To achieve the above-mentioned object the present invention provides a method of producing an X-ray photograph of a specimen through the intermediary of an X-ray converter, characterised in that a specimen-modulated X-ray beam is converted to an electrical signal through relative scanning displacement of the specimen and an X-ray converter, the electrical signal is converted to a corresponding light signal, and said light signal is simultaneously projected through a lens system onto a light-sensitive film while the film is transported in the image-plane in synchronism with said relative scanning displacement of said specimen and said converter.

The present invention furthermore provides an apparatus for producing an X-ray photograph of a specimen through the intermediary of an X-ray converter, characterised in that the apparatus comprises a specimen support, an X-ray converter, means for relatively displacing said specimen support and said converter to cause scanning of said specimen by said converter, means for causing an electrical signal generated responsive to incidence of X-rays on said converter to be converted to a corresponding light signal, means for focusing the image formed by said light signal onto a light-sensitive material, means for transporting said light-sensitive material in said plane synchronously with the relative displacement of said specimen support and said converter.

The present invention overcomes the prior art inconveniences and furthermore adds several advantages.

According to the method of the present invention a specimen to be examined needs no longer to be covered with light-sensitive film. The specimen is scanned by means of an X-ray source and the specimen-modulated X-rays are converted into an electrical representation that is used to generate a visible light image. This light image exposes a common light-sensitive film material in order to produce a hard copy corresponding with the examined specimen.

Conversion of the detected X-rays into an electrical signal thereto provides a suitable form for application of image processing techniques such as enlargement, scale reduction and image enhancement techniques.

During the exposure of the light-sensitive film by means of image projected by the camera, optical integration of the emitted light is performed by the light-sensitive film. The optical integration has the same result as can be obtained by computed signal integration, namely providing an increase of the signal-to-noise ratio of the measured values.

According to the present invention X-rays transmitted by an irradiated specimen are captured by an X-ray converter. An X-ray converter essentially consists of an intensifier tube and a television camera. The intensifier tube is an evacuated glass envelope having a fluorescent input phosphor screen. X-rays that are captured by said input screen produce light photons. Adjacent to the input phosphor is a photocathode that produces electrons when light strikes it. The electrons are in the body of the intensifier tube accelerated by means of applied voltages and reach an output phosphor. The output phosphor fluoresces when electrons strike it. The image on the output phoshor which is much brighter than the ingoing image is transformed into a video signal by a vidicon tube - (television camera tube).

The obtained electrical representation of the specimen-modulated X-ray beam can be converted into a light image by means of a modulated laserbeam. The electrical signal is used to control said modulation.

In a preferred embodiment of the preset invention the electrical representation corresponding with the specimen-modulated X-ray beam is fed into a CRT-camera. A CRT-camera basically comprises a cathode ray tube having a small flat fluorescent screen, camera optics, a shutter, and electronically controlled shutter circuitry. The video signal is applied to the cathode ray deflecting means in the cathode ray tube. A light-sensitve material is transported in synchronism with the relative movement of said specimen and said converter in the imageplane of said camera and is exposed to the image on the screen of the camera as long as the shutter is opened. The shutter control circuitry commands the opening of the shutter for a period during which the successive image frames building up an entire video image are displayed. This embodiment is preferred because it is compatible with the available representation of the examined specimen in the form of a video signal and because it is less expensive than the above-mentioned embodiment.

The present invention will become fully understood from a detailed description given hereinbelow and from the accompanying drawings which are given by way of example and are not limitative of the present invention and wherein,

Fig. 1 illustrates a preferred embodiment of an apparatus according to the present invention,

Fig. 2 illustrates a first example of a method for performing the synchronisation of the movement of X-ray converter and the transportation of the light-sensitive recording material,

Fig. 3 illustrates a second method for performing said synchronisation,

Fig. 4 shows another synchronising method,

Fig. 5 shows an embodiment of a circuit that can be used for obtaining a speed control signal for a driving motor.

In the various figures corresponding parts are denoted by the same reference numbers.

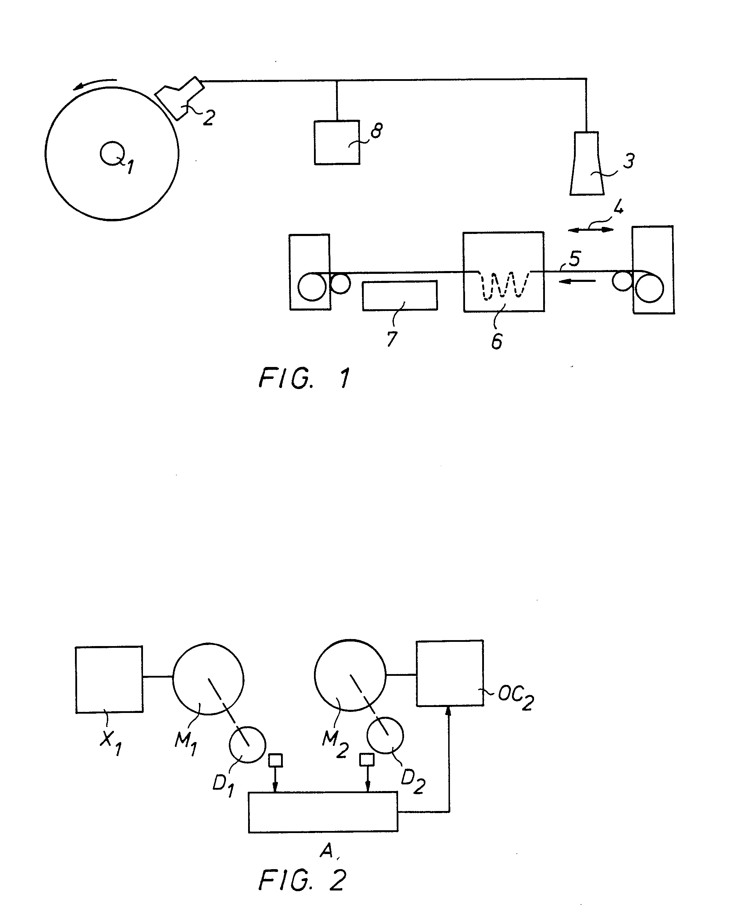

Fig. 1 shows a preferred embodiment of an apparatus for producing a hard-copy of an X-ray image on a light-sensitive film according to the present invention.

The apparatus will be explained with reference to the examination of a weld on a circular tube. It is obvious that the use of the apparatus is not limited to this application.

An X-ray source 1 is mounted in the inner part of a circular tube that has a weld on its circumference. The surface of the tube is exposed to the radiation emitted by said X-ray source and directed in the radial direction through a rotatable mask slot (not shown on this figure) to said surface. X-rays that are transmitted through the tube are captured by an X-ray converter 2 that is mounted near the surface of said tube. The X-ray converter is transported past said tube along the welding that is to be examined. The direction of this displacement is indicated by the arrow.

By X-ray converter 2 X-rays are converted into an electric representation of the captured image. This electric representation is applied to a CRT-camera 3 that converts said signal into a visible image on its phosphor screen. The CRT-camera furthermore is provided with suitable camera optics 4. In the image plane of said optics a light-sensitive film 5, supported on rollers, is unwound. One or more of the rollers are driven by a motor. The CRT-camera exposes the light-sensitive film to an image corresponding with the examined part of the weld on the circular tube.

In order to obtain an unequivocal representation of the X-ray image that was transmitted to the X-ray converter, the light-sensitive film and the X-ray converter have to move respectively past the weld and past the CRT-screen at uniform speed. To assure this synchronisation a control circuit as will be explained with reference to figure 2 will be connected in between the driving motor of the X-ray converter and the driving motor of the film transporting rollers. This synchronizing device is not shown in figure 1.

In order to enable winding of a developed and fixed light-sensitive film, the film passes through a processing station (6) before it is re-wound. It is furthermore possible to position the control station -(7), where the evaluation of the images takes place, between the processing station and the station wherein the film is re-wound. This configuration of unwinding-winding, processing and examination station provides that the entire device can be made very compact.

In addition to this embodiment of an apparatus according to the present invention, a monitor (8) can be added in order to allow fast intermediate examination of the weld on the monitor.

Figure 2 illustrates a first device for synchronizing the motor that drives the X-ray converter past the object to be examined and the motor that controls the transport of the light-sensitive film in the CRT-camera.

A pulse disc is used to achieve an indication of the motor speed. Such a pulse disc is provided on its circumference with equally spaced light-absorbing and light-transmitting areas and which may be mounted on the shaft of the motor so as to rotate in synchronism with the motor. A photohead comprising a light-source and a light-detecting photoelectric cell is used in association with the disc so that the successive light-absorbing and light-transmitting areas of the disc generate pulses, the frequency of which is a measure of the speed to be determined.

In this figure the two DC motors are respectively indicated by M1 with corresponding drive DC1 and M2 with its corresponding drive DC2.

A pulse disc is provided on the shaft of each of the two motors. The discs D1 and D2 generate corresponding pulse trains. The frequency of the pulse trains are compared in an electronic device -(A) the speed(s) of motor M2 is adjusted in dependence on the result of this comparison.

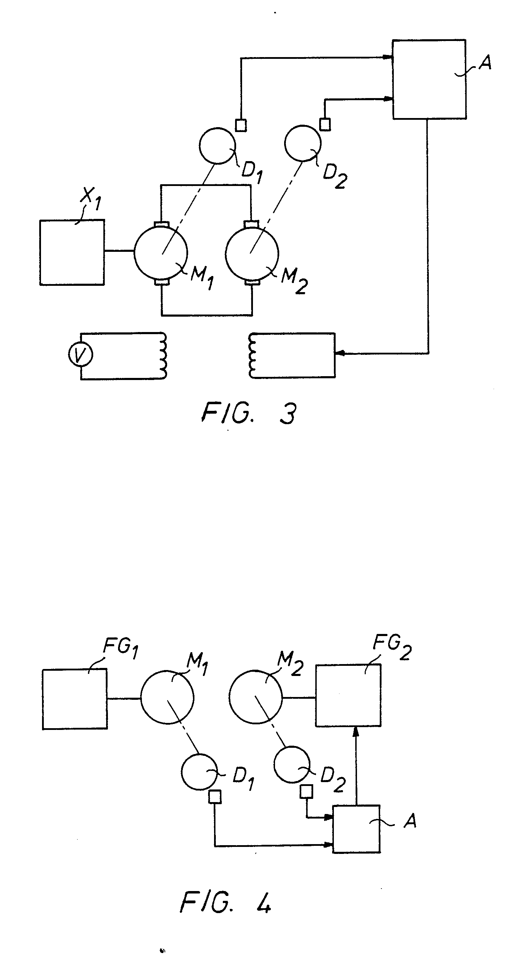

Figure 3 shows two motors the armatures of which are connected to each other in a parallel configuration. On the shaft of each motor a pulse disc is mounted.

The driver of M1 is indicated by the reference DC1. The signals resulting from the pulse discs D1 and D2 are compared in A and the field of motor M2 is adjusted in dependence on the result of this comparison.

In figure 4 another synchronising arrangement is shown. Both motors M1 and M2 however are AC motors that are driven by corresponding frequency generators FG1 and FG2. On the shaft of the motors pulse discs D1 and D2 are mounted. The pulse signals that are generated, are compared in comparator A and depending on the result the frequency of the frequency generator driving one of the motors (in the figure this is FG2, driving motor M2) is controlled.

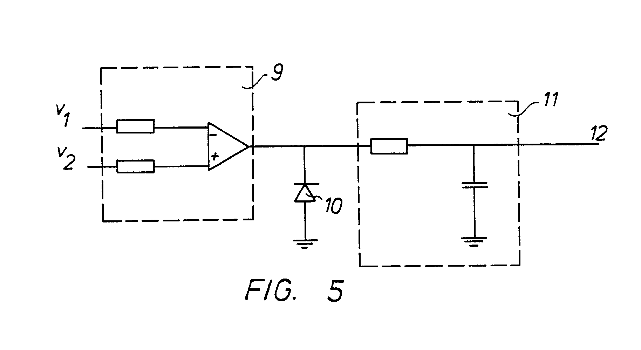

Figure 5 shows another embodiment of an electronic circuit providing a signal that can be used to synchronise the motors is shown.

The pulse trains v1 and v2 that are generated by two pulse discs respectively mounted on the shaft of the motor driving the X-ray converter and on the shaft of the motor driving the light-sensitive film, are fed into a summing device 9. In this embodiment the summing device comprises an operational amplifier and resistances R1 and R2. The output of the operational amplifier is rectified by diode 10. Next the DC average value is obtained by a filter circuit 11 consisting of resistance R3 and capacitance C. The output 12 of said filter is fed to the drive of one of the motors in order to adapt said motor's speed.

## Claims

1. A method of producing an X-ray photograph of a specimen through the intermediary of an X-ray converter, characterised in that a specimen-modulated X-ray beam is converted to an electrical signal through relative scanning displacement of the specimen and an X-ray converter, the electrical signal is converted to a corresponding light image, and said light image is simultaneously projected through a lens system onto a light-sensitive film while the film is transported in the image-plane in synchronism with said relative scanning displacement of said specimen and said converter.

2. Method according to claim 1 wherein said electrical signal is converted to a corresponding light image by means of a laser-beam that is modulated in accordance with said electrical signal.

3. Method according to claim 1 wherein said light image is obtained by applying said electrical signal to a cathode ray tube.

4. An apparatus for producing an X-ray photograph of a specimen through the intermediary of an X-ray converter, characterised in that the apparatus comprises a specimen support, an X-ray converter, means for relatively displacing said specimen support and said converter to cause scanning of said specimen by said converter, means for causing an electrical signal generated responsive to incidence of X-rays on said converter to be converted to a corresponding light signal, means for focusing the image formed by said light signal onto a light-sensitive material, means for transporting said light-sensitive material in said plane synchronously with the relative displacement of said specimen support and said converter.

5. Apparatus according to claim 4 wherein said means for causing said electrical signal to be converted into a light signal comprise a laser, laser-beam modulating means where said electrical signal is applied to, and laser-beam deflecting means providing the scanning of said light-sensitive material by means of the modulated laser-beam.

6. Apparatus according to claim 4 wherein said electrical signal is applied to a cathode ray tube so as to obtain a light image where said light-sensitive material is exposed to.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 050 352 (SIEMENS)<br><br>* page 4, lines 4-17; figure 1 *<br><br>----- | 1,3,4,<br>6 | H 04 N 5/32<br>G 03 B 41/02 |

|  |
|---|
| **TECHNICAL FIELDS SEARCHED (Int. Cl.4)** |
| H 04 N 7/00<br>H 04 N 5/00<br>G 03 B 41/00 |

The present search report has been drawn up for all claims

| Place of search | Date of completion of the search | Examiner |
|---|---|---|
| BERLIN | 20-01-1987 | DUDLEY C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82